# EUROPEAN PATENT SPECIFICATION

(11) **EP 1 414 545 B1**
(45) Date of publication and mention of the grant of the patent: **28.06.2006**
(21) Application number: 02755749.5
(22) Date of filing: 01.08.2002
(51) Int. Cl.: B01D 45/06, B01D 45/04, B01D 39/12

(54) **APPARATUS FOR AND METHOD OF TRAPPING PRODUCTS IN EXHAUST GAS**
VORRICHTUNG UND VERFAHREN ZUM ABSCHEIDEN VON PRODUKTEN IN EINEM ABGAS
DISPOSITIF ET PROCEDE DE PIEGEAGE DE PRODUITS DE GAZ D'ECHAPPEMENT

(30) Priority: 10.08.2001 JP 2001243189
(43) Date of publication of application: 06.05.2004
(73) Proprietor: EBARA CORPORATION, Ohta-ku, Tokyo 144-8510 (JP); SHARP KABUSHIKI KAISHA, Osaka-shi, Osaka 545-8522 (JP)
(72) Inventor: TANAKA, Keiji, c/o Ebara Corporation, Ohta-ku, Tokyo 144-8510 (JP); YANAGISAWA, Kiyoshi, c/o Ebara Corporation, Ohta-ku, Tokyo 144-8510 (JP); AKASAKA, Yoshitaka, c/o Sharp Kabushiki Kaisha, Osaka-shi, Osaka 545-8522 (JP); KURODA, Toshihiro, c/o Sharp Kabushiki Kaisha, Osaka-shi, Osaka 545-8522 (JP); MITSUDOME, Kazuya, c/o Sharp Kabushiki Kaisha, Osaka-shi, Osaka 545-8522 (JP)
(74) Representative: Wagner, Karl H.
(86) International application number: PCT/JP2002/007852
(87) International publication number: WO 2003/015896

(56) References cited:
- EP-A- 0 134 002
- EP-A- 0 564 914
- EP-A- 1 050 681
- WO-A-00/64561
- CA-A- 2 105 636
- DE-A- 2 412 995
- FR-A- 2 677 268
- FR-A- 2 784 324
- GB-A- 1 383 384
- GB-A- 1 400 117
- GB-A- 1 455 382
- US-A- 3 856 487
- US-A- 4 301 012
- US-A- 4 904 288
- US-A- 5 211 729
- US-A- 6 156 107
- US-A1- 2001 003 892

## Description

### Technical Field

The present invention relates to an apparatus for and a method of trapping, as solid substances, various products contained in exhaust gases which are discharged from a process apparatus such as a semiconductor fabrication apparatus when it is evacuated.

### Background Art

Process apparatus such as semiconductor fabrication apparatus are evacuated for film growth and etching on semiconductor substrates therein. Exhaust gases discharged from such process apparatus after film growth and etching on semiconductor substrates contain a lot of gases including unreacted gases and reaction products newly created by reactions. While these gases are flowing through an exhaust passage, they collide upon surface irregularities in the exhaust passage, and are solidified into solid substances due to changes in temperature, speed, and direction.

When the solid substances are deposited in pipes and on rotor of a vacuum pump connected to the process apparatus, they lower the exhaust conductance, tending to cause a vacuum pump failure.

If the vacuum pump fails during the process performed by the semiconductor fabrication apparatus, then semiconductor substrates that are being processed by the semiconductor fabrication apparatus may possibly suffer trouble. Trapping apparatus have widely been used in the art as a means for trapping reaction products contained in exhaust gases. The trapping apparatus have a trapping member such as a metal plate, mesh, or baffle plate which is cooled. Exhaust gases discharged from the process apparatus are brought into contact with the cooled trapping member, whereupon gases products contained in the exhaust gases are solidified into solid substances, which are deposited on the cooled trapping member. The products contained in the exhaust gases generally have such gas/solid temperature characteristics that they are in a gaseous state at higher temperatures and a solid phase at lower temperatures. When exhaust gases containing products contact the trapping member at a low temperature, the products are brought into contact with the surface of the cool trapping member, and are solidified into solid substances, which are deposited on the trapping member.

If the mesh size of the mesh of the trapping member is reduced, then the trapping efficiency with which to trap the products in the exhaust gases increases. However, the reduced mesh size tend to cause the trapping member to be clogged frequently. Therefore, the trapping apparatus needs to be serviced often and has its service life shortened. Conversely, if the mesh size of the mesh of the trapping member is increased, then the mesh is less susceptible to clogging due to solid substances, but the trapping efficiency decreases.

US 6,156,107 discloses a trap apparatus that includes a case provided for a gas exhaust system used for a film forming equipment which carries out a film forming process on an object, a gas supply port, made in the case and connected to an exhaust pipe of the gas exhaust system, for introducing an exhaust gas flowing through the exhaust pipe, into the case, a gas exhaust port, made in the case and connected to an exhaust pipe of the gas exhaust system, for exhausting the exhaust gas flowing through an inner space of the case, to the exhaust pipe, a plurality of partition plates arranged in the case so as to partition the inner space of the case into a plurality of rooms between the gas supply port and the gas exhaust port, a gas distribution port provided in some of the partition plates such that the exhaust gas introduced into the case through the gas supply port, is allowed to flow through the rooms partitioned by the partition plates, in the order, and then exhausted from the gas exhaust port, a trap mechanism housed in each of the rooms, for trapping reaction byproducts contained in the exhaust gas introduced into the case through the gas supply port, and a temperature control mechanism for individually controlling the temperatures in the rooms partitioned by the partition plates.

GB 1 400 117 discloses a gas washing apparatus comprising a tower- like or cylindrical housing with a dirty gas inlet, a clean gas outlet, a filter bed with jets arranged there above for introducing a washing liquid and two batteries of drip-type separators and arranged remote from the bed and from each other, battery consisting of inclined sets of parallel plane rebound surfaces, battery comprising re- bound surfaces trapezoidal in vertical section and rinsing jets for delivering a scouring liquid to at least the lower battery. In both sets surfaces and are directing grooves chevron shaped when viewed towards the plane of the surfaces. Chamber partition walls are also provided.

US 3,856,487discloses a gas scrubber for the removal of particulates and chemical contaminants from air and other gases. The particulates and chemical contaminants are removed from gas drawn through the scrubber, by inertial separation, spraying with water or liquid chemicals, and filtering techniques. A throat section of adjustable cross-sectional area is provided in the scrubber to provide optimum air velocity and turbulence for maximum scrubbing efficiency over a wide range of air handling capacities. A two stage sump is provided for the spray water or liquor to prevent clogging of the spray nozzles. Removable filter baskets of variable depth are utilized during final treatment of the air or gas being cleaned

US 5,211,729 discloses a baffle/settling chamber that removes solid particulates from the exhaust of a semiconductor deposition equipment while reducing pressure fluctuation in the exhaust to provide a more uniform deposition of chemicals. A container having an inlet baffle plate, an outlet baffle plate and three settling plates disposed there between are disposed in a chamber and reside serially in the exhaust flow.

US 2001/003892 discloses an apparatus for improving the efficiency of collection of solidification constituents and solids in exhaust gas and to prevent early blockage of the filter without damaging the vacuum pump. In an exhaust path 48a, a vacuum pump and exhaust gas filtration device are provided. This exhaust gas filtration device is constituted by a trap device, pre-filter and filter. The pre-filter reduces the exhaust gas flow rate flowing through the interior of the exhaust path by controlling the exhaust gas flow path in the vessel. The aforesaid exhaust path is constituted by connecting this vacuum pump, trap device, pre-filter and filter which are arranged in this order from the side of airtight vessel and connected through piping if required.

In accordance with the present invention an apparatus and a method for controlling gain of a torque sensor, as set forth in claim 1 and claim 6, respectively, are provided. Preferred embodiments are claimed in the dependent claims.

### Disclosure of Invention

It is therefore an object of the present invention to provide an apparatus for trapping products contained in exhaust gases with a relatively high trapping efficiency, which apparatus needs to be serviced less often and has a longer service life than conventional trapping apparatus, and a method of trapping products contained in exhaust gases which is carried out by the trapping apparatus.

According to the present invention, there is provided an apparatus for trapping solid substances converted from reaction products contained in exhaust gases discharged from a process apparatus by a vacuum pump, comprising a trap member for contacting the exhaust gases and trapping reaction products contained in exhaust gases, and a trap housing accommodating the trip member therein, the trap housing having an inlet port for introducing exhaust gases, and an exhaust gas space connected to the inlet port and having an increased cross-sectional area in the direction in which exhaust gases flow in, the trap housing having a flow passage defined therein for passing the exhaust gases in the exhaust gas space and then changing the direction of the exhaust gases so as to flow from the exhaust gas space substantially perpendicularly to the trap member so as to pass the exhaust gases through the trap member while in contact therewith.

With the above arrangement, the exhaust gas space defined in the trap housing and connected to the inlet port can have a cross-sectional area larger than the inlet port. The exhaust gases introduced from the inlet port into the exhaust gas space flow at a reduced space, allowing reaction products contained therein to contact the trap member which is cooled and to be precipitated and deposited as solid substances. As the exhaust gases change their direction in the trap housing so as to flow from the exhaust gas spaced substantially perpendicularly to the trap member, the exhaust gases flow slowly in contact with the trap member. Therefore, the reaction products contained in the exhaust gases are reliably brought into contact with the trap member and trapped as solid substances with higher probability for increased trapping efficiency.

Preferably, a trap filter of a wavy mesh extends along a surface of the trap member and along the exhaust gas space. The wavy mesh provides a trapping surface for producing stagnant regions in the flow of exhaust gases for increasing the trapping efficiency.

The trap member preferably comprises a laminated assembly of trap filters having respective different mesh sizes which are progressively smaller along the direction in which the exhaust gases flow through the laminated assembly.

The trap filter of the larger mesh size traps large-size reaction products contained in the exhaust gases as solid substances, and the trap filter of the smaller mesh size traps small-size reaction products contained in the exhaust gases as solid substances. With the trap filters being spaced by gaps from each other, solid substances are prevented from being deposited on only some of the trap filters, but are deposited uniformly over the trap filters. Therefore, the trapping apparatus can be serviced for cleaning or other maintenance activities less frequently.

The above and other objects, features, and advantages of the present invention will become apparent from the following description when taken in conjunction with the accompanying drawings which illustrate preferred embodiments of the present invention by way of example.

### Brief Description of Drawings

FIG. 1 is a plan view of a trapping apparatus according to a first embodiment of the present invention;
FIG. 2 is a front elevational view of the trapping apparatus shown in FIG. 1;
FIG. 3 is a cross-sectional view taken along line III - III of FIG. 1;
FIG. 4A is a fragmentary perspective view of a wavy mesh;
FIG. 4B is a fragmentary perspective view of a plain-weave mesh;
FIG. 4C is a cross-sectional view showing stagnant regions which are formed when exhaust gases flow perpendicular to a trap filter;
FIG. 4D is a cross-sectional view showing stagnant regions which are formed when exhaust gases flow parallel to a trap filter;
FIG. 5A is a fragmentary perspective view of a trap filter in the form of a wavy mesh;
FIG. 5B is a fragmentary cross-sectional view of an arrangement of trap filters;
FIG. 5C is a fragmentary cross-sectional view of a wire demister;
FIG. 6 is a view of another perforated metal plate;
FIGS. 7A through 7D are plan views showing various joint configurations between trap housings and inlet ports;
FIG. 8 is a cross-sectional view taken along line VIII - VIII of FIG. 3;
FIG. 9 is a cross-sectional view of a trapping apparatus according to a second embodiment of the present invention; and
FIGS. 10A, 10B, and 10C are block diagrams of various evacuating systems.

### Best Mode for Carrying Out the Invention

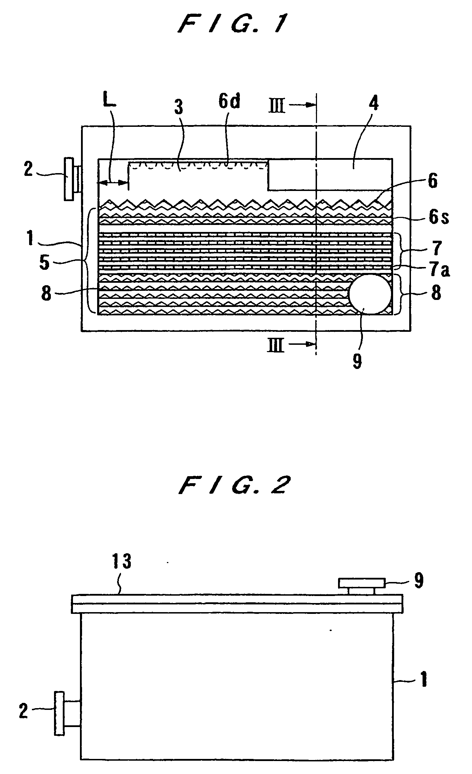

FIGS. 1 through 3 show a trapping apparatus according to a first embodiment of the present invention.

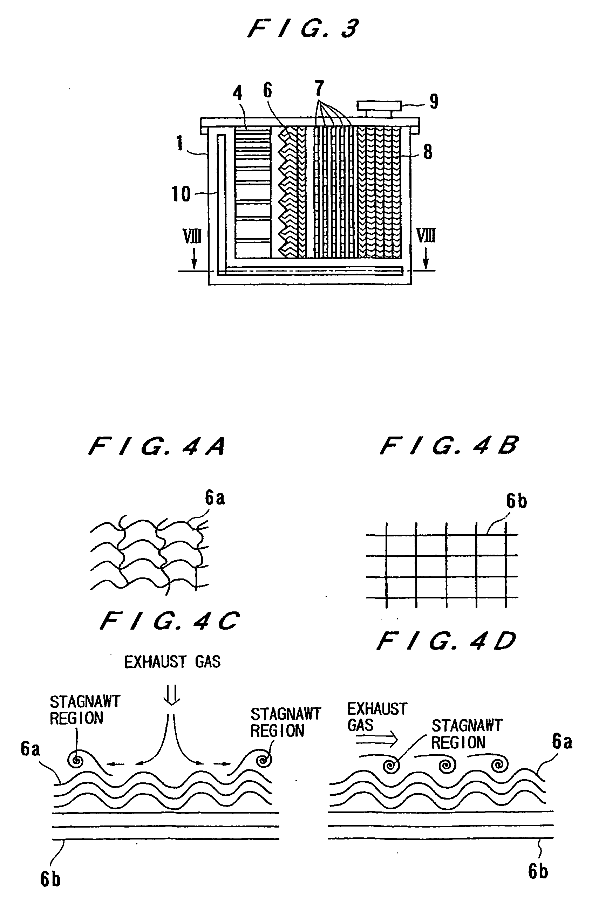

As shown in FIGS. 1 through 3, the trapping apparatus has a box-shaped trap housing 1 disposed in the path of exhaust gases discharged from a process apparatus by a vacuum pump. The trapping apparatus has an inlet port 2 mounted on a side wall of the trap housing 1 and an outlet port 9 mounted on an upper wall of the trap housing 1 near a side wall thereof which is opposite to the side wall on which the inlet port 2 is mounted. The trap housing 3 has a wide exhaust gas space 3 defined therein which communicates with the inlet port 2, and houses a metal plate assembly 4 as a trap unit disposed in a region of the exhaust gas space 3 remote from the inlet port 2. The metal plate assembly 4 provides a large area of contact with exhaust gases introduced from the inlet port 2 into the exhaust gas space 3 to deposit a large amount of solid substances therein. The metal plate assembly 4 comprises a plurality of metal plates combined together. The metal plate assembly 4 projects from an inner wall surface of the trap housing 3 into the exhaust gas space 3 and extends parallel to the direction in which exhaust gases from the inlet port 2 flow in the exhaust gas space 3. The trap housing 1 has a cooling water flow passage 10 (see FIG. 3) and is cooled by cooling water flowing through the cooling water flow passage for thereby lowering the temperatures of the inner wall surface of the trap housing 3 and the metal plate assembly 4 joined thereto. When gaseous reaction products contained in the exhaust gases in the exhaust gas space 3 contact the inner wall surface of the trap housing 3 and the metal plate assembly 4 which are thus cooled, the gaseous reaction products are solidified into solid substances.

The inlet port 2 has a cross-sectional area which is much smaller than the cross-sectional area of the exhaust gas space 3. Therefore, when exhaust gases are introduced from the inlet port 2 into the exhaust gas space 3, the speed of the exhaust gases is reduced. The inlet port 2 may be of a tapered shape with its diameter progressively greater toward the trap housing 1 for slowing down the clogging of the inlet port 2 with powdery substances produced when gaseous products contained in the exhaust gases are solidified.

As described above, the exhaust gas space 3 is positioned adjacent to the inner wall surface of the trap housing 3 and the metal plate assembly 4 which are cooled by cooling water flowing through the cooling water flow passage.

Consequently, when exhaust gases are introduced from the inlet port 3 into the exhaust gas space 3, they are slowed down in the exhaust gas space 3 and tend to stay in contact with the inner wall surface and the metal plate assembly 4. Gaseous reaction products contained in the exhaust gases are thus solidified into solid substances, which are trapped in the exhaust gas space 3.

The metal plate assembly 4 may be replaced with, or combined with, a trap filter 6d in the form of a wavy mesh which is mounted on the inner wall surface of the trap housing 3 and extends parallel to the direction in which exhaust gases flow in the exhaust gas space 3.

The trap filter 6d thus positioned provides a large area of contact with exhaust gases for an increased trapping efficiency. The trap filter 6d has a most upstream end which is preferably spaced from the inlet port 2 by a certain distance L. Since the trap filter 6d is thus spaced from the inlet port 2, the solid substances converted from gaseous reaction products are prevented from being deposited near the inlet port 2 and hence from clogging the inlet port 2.

The trap housing 1 also houses therein a trap assembly 5 comprising a laminated assembly of trap filters adjacent to the exhaust gas space 3. Specifically, the trap assembly 5 comprises a trap filter 6 including wavy meshes lying in a plane along the exhaust gas space 3 and a trap filter 6s including weave meshes having a smaller mesh size than the trap filter 6 and disposed adjacent to and downstream of the trap filter 6 in a gas flow passage in the trap housing 1, and a laminated assembly 7 of plural mesh filters having respective mesh sizes, which is disposed downstream of the trap filter 6 in the gas flow passage. Specifically, the laminated assembly 7 comprises a plurality of mesh filters having successively smaller mesh sizes in the downstream direction, e.g., 14 mesh, 30 mesh, 80 mesh, and 150 mesh per square inch. These mesh filters are spaced at intervals ranging from 2 to 5 mm which serve as spaces for trapped solid substances to grow therein. The laminated assembly 7 is followed by a perforated metal plate 7a disposed immediately downstream thereof and having an aperture ratio of about 30 %. The perforated metal plate 7a serves to develop a pressure loss. The perforated metal plate 7a is followed by a plurality of wire demisters 8 disposed immediately downstream thereof. The wire demisters 8 serve as trap members for developing a smaller pressure loss than the perforated metal plate 7a. Exhaust gases that have passed through the perforated metal plate 7a flow relatively freely through the wire demisters 8 into the outlet port 9.

The trap assembly 5 thus disposed adjacent to and downstream of the exhaust gas space 3 develops a pressure loss as a whole. Exhaust gases flowing into the exhaust gas space 3 temporarily stays in the exhaust gas space 3, and then flow from the exhaust gas space 3 perpendicularly to the trap assembly 5 due to the flow rectifying action of the trap filters including the perforated metal plate 7a. Therefore, when the exhaust gases are introduced into the trap housing 1, they flow first in the exhaust gas space 3 parallel to the trap assembly 5 and then change the direction so as to flow perpendicularly to the trap assembly 5. In the trap assembly 5, the exhaust gases flow through an increased cross-sectional area in the direction perpendicular to the trap assembly 5. Therefore, the exhaust gases slowly pass through the trap assembly 5, during which time the reaction products contained in the exhaust gases are solidified and deposited on the surfaces of the trap filters of the trap assembly 5.

In the trap assembly 5, the exhaust gases first pass through the trap filter 6, and then pass through the laminated assembly 7 of mesh filters while in contact therewith, in which the reaction products contained in the exhaust gases are solidified into solid substances which are deposited on the surfaces of the mesh filters. Since the exhaust gases pass perpendicularly through the trap filter 6 of relatively large mesh sizes and then pass perpendicularly through the laminated assembly 7 of mesh filters of relatively small mesh sizes, the reaction products contained in the exhaust gases can be trapped highly efficiently by the trap assembly 5 as a whole. The mesh filters of the laminated assembly 7 should preferably have successively smaller mesh sizes in the downstream direction, e.g., 14 mesh, 30 mesh, 80 mesh, and 150 mesh per square inch. Therefore, the laminated assembly 7 first traps reaction products of relatively large size and then traps reaction products of relatively small size.

As shown in FIG. 4A, each of the wavy meshes 6a is made up of thin wires of stainless steel woven into a wavy mesh having ridges. As shown in FIG. 4B, each of the plain-weave meshes 6b is made up of thin wires of stainless steel woven into a plain-weave mesh. When exhaust gases are introduced into the trap assembly 5, they first flow perpendicularly to the trap filters 6a and then collide upon the wavy meshes 6a, as shown in FIG. 4C. Then, the exhaust gases flow along and parallel to the wavy surface of the wavy meshes 6a, as shown in FIGS. 4C and 4D. While the exhaust gases flow along and parallel to the wavy surface of the wavy meshes 6a, stagnant regions are developed in the flow of the exhaust gases. In the stagnant regions, reaction products contained in the exhaust gases stay in contact with the mesh wires for a relatively long period of time, and then solidified into solid substances, which are deposited on the wavy meshes 6a. The deposited solid substances are thus trapped by the wavy meshes 6a. Since the wavy meshes 6a are superposed one over another, they provide a large space therein which tends to leave a gas passage in the wavy meshes 6a even when the solid substances are deposited on the wavy meshes 6a. Accordingly, the trap filters 6a are resistant to clogging.

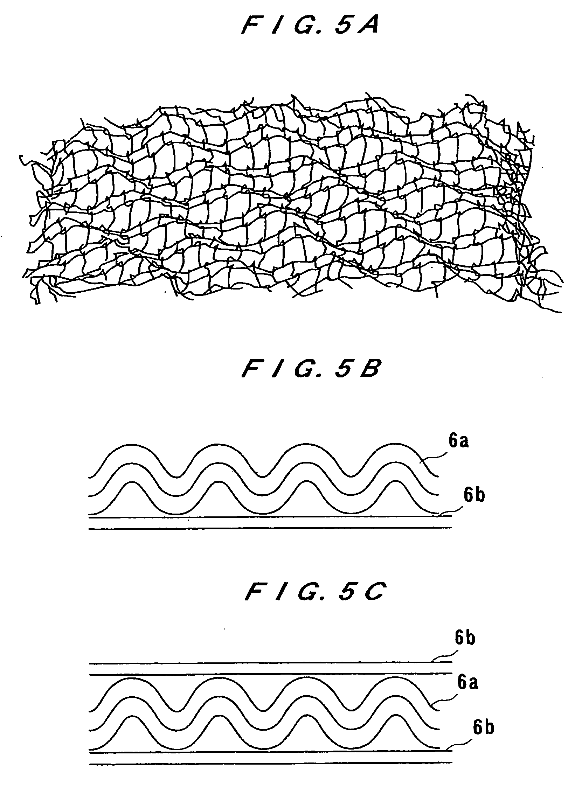

FIG. 5A shows a trap filter in the form of a wavy mesh for use as each of the wavy meshes 6a. The trap filter shown in FIG. 5A is made up of thin wires, each having a diameter of 0.3 mm, of stainless steel woven into a wavy mesh having ridges. The trap filter has a mesh size of 14 mesh per square inch, and has its ridges spaced at intervals of about 15 mm and having a height of about 10 mm.

FIG. 5B shows an arrangement of the trap filter 6. As shown in FIG. 5B, a plurality of (three, four, or five) wavy meshes 6a are superposed one over another, and fixedly disposed on the plain-weave meshes (porous members) 6b each made of thick wires of stainless steel having a diameter of about 1.5 mm. The plain-weave meshes 6b are relatively rigid, and the wavy meshes 6a which are relatively soft are tied to the plain-weave meshes 6b. The wavy meshes 6a may alternatively welded or otherwise fixed to the plain-weave meshes 6b. The trap filter 6 which is composed of the wavy meshes 6a and the plain-weave meshes (porous members) 6b has a thickness of about 25 mm. As the plain-weave meshes 6b serve to support the relatively soft wavy meshes 6a, the plain-weave meshes 6b have a relatively large mesh size of about 3 mesh per square inch.

FIG. 5C shows a wire demister for use as each of the wire demisters 8. The wire demister comprises a plurality of wavy meshes 6a shown in FIG. 5A and a pair of sets of plain-weave meshes 6b shown in FIG. 5B disposed one on each side of the wavy meshes. In the trap apparatus shown in FIGS. 1 through 3, the wire demisters 8 are disposed downstream of the perforated metal plate 7a. The wire demisters 8, each including wavy meshes, are capable of trapping reaction products contained in exhaust gases with a high efficiency. As the wire demisters 8 cause a relatively small pressure loss, they can change relatively freely the direction of exhaust gases which have passed perpendicularly through the perforated metal plate 7a and can lead the exhaust gases to the outlet port 9. The wire demister shown in FIG. 5C is illustrated by way of example only, and may be modified with respect to the numbers of wavy meshes 6a and plain-weave meshes 6b, the mesh sizes thereof, and the diameters of the wires that make up the wavy meshes 6a and the plain-weave meshes 6b.

In the above embodiment, the trapping apparatus comprises a trap assembly which employs a trap filter including wavy meshes and plain-weave meshes, a perforated metal plate, and a wire demister. However, the trap assembly may employ any of various filters of other types, and a combination of mesh sizes and spacings or distances between filter meshes may be selected depending on the site where the vacuum pump is installed and other factors.

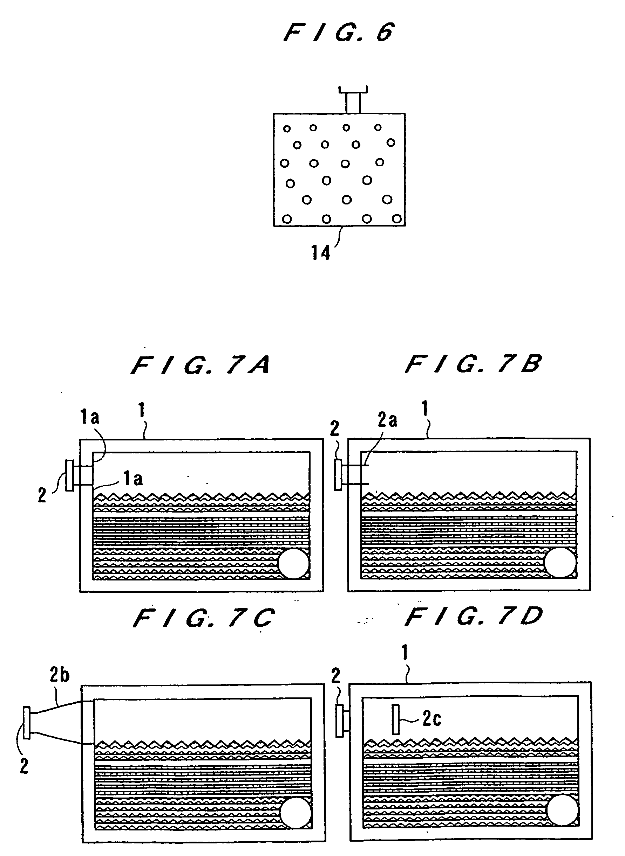

FIG. 6 shows another embodiment of perforated metal plate 14 which can be used in the trapping apparatus according to the present invention. As shown in FIG. 6, the perforated metal plate 14 has a number of circular holes defined in a metal plate. The circular holes are preferably arranged in a staggered array, and have opening areas progressively smaller in a downward direction from an upper edge of the metal plate toward a lower edge thereof. If the outlet port of the trapping apparatus is positioned near the upper edge of the perforated metal plate, then the perforated metal plate can uniformize the rate of exhaust gases passing through the perforated metal plate over the entire surface thereof. In FIG. 6, the holes defmed in the metal plate are shown in circular in shape, but may be of any of various other shapes selected in view of design considerations.

FIGS. 7A through 7D show various joint configurations between trap housings and inlet ports. In FIG. 7A, an inlet port 2 for introducing exhaust gases into a trap housing 1 comprises a straight port. When exhaust gases are introduced from the straight inlet port 2 into the trap housing 1, reaction products contained in the exhaust gases are likely to be solidified and deposited as solid substances on a peripheral region around the opening of the inlet port 2. To prevent such solid substances from being deposited on the peripheral region around the opening of the inlet port 2, an inlet port 2 shown in FIG. 7B has an inner end projecting into the trap housing 1. An inlet port 2 shown in FIG. 7C has a tapered tube 2b which is connected to and opens into the trap housing 1. The tapered tube 2b is effective to prevent reaction products from being deposited near the entrance end of the inlet port 2 and hence to allow exhaust gases to flow smoothly into the trap housing 1. FIG. 7D shows a baffle plate 2c disposed in the trap housing 1 for deflecting exhaust gases introduced from an inlet port 2. The baffle plate 2c serves to disturb the flow of exhaust gases in the trap housing 1 for thereby causing the exhaust gases to stay for an increased period of time in the trap housing 1, thus increasing the efficiency with which to trap solid substances in the trap housing 1. In the above embodiment and the structures shown in FIGS. 7A through 7D, the wavy meshes are disposed in the most upstream side of the trap assembly 5 with respect to the flow of exhaust gases in the trap housing 1. However, the wavy meshes may be disposed in the most downstream side of the trap assembly 5 with respect to the flow of exhaust gases in the trap housing 1.

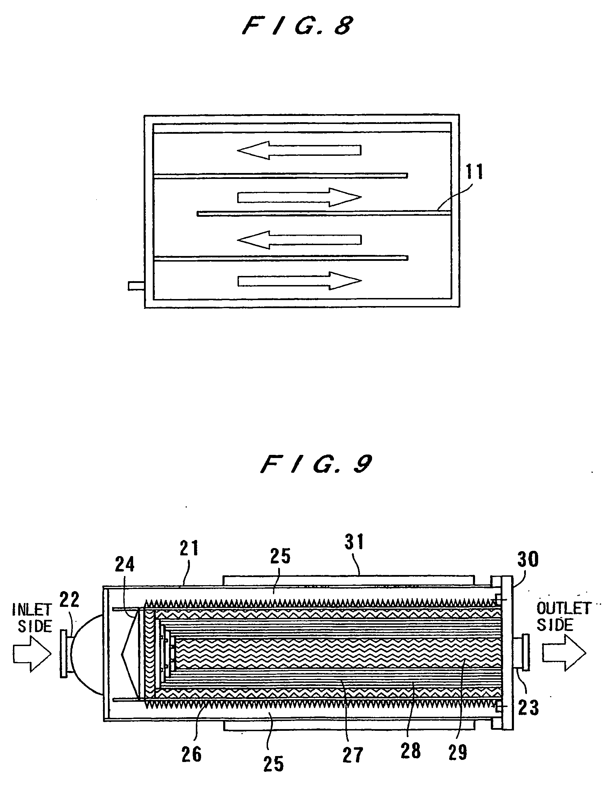

FIG. 8 is a cross-sectional view taken along line VIII - VIII of FIG. 3. In FIGS. 3 and 8, a plurality of staggered partition plates 11 are disposed in the cooling water flow passage 10 to provide a meandering cooling water flow passageway for sufficiently cooling the trap housing 1, the metal plate assembly 4, and the trap assembly 5. The cooling water flowing through the meandering cooling water flow passageway is prevented from staying in local regions, but is caused to flow smoothly to cool the metal plate assembly 4 and the trap assembly 5.

The elements 6, 7, 8 of the trap assembly 5 need to be replaced with new ones depending on the observation of changes in the pressure of exhaust gases in the inlet port 2 and the outlet port 9, i.e., the differential pressure between the inlet port 2 and the outlet port 9. The clogged state of these elements 6, 7, 8 of the trap assembly 5 can be determined as follows: An optical sensor having a light-emitting component and a light-detecting component is disposed along the direction of the flow of exhaust gases through the trap assembly 5. The intensity of light which is emitted from the light-emitting component, passes through the elements 6, 7, 8 of the trap assembly 5, and is detected by the light-detecting component is measured to determine how solid substances are deposited on the elements 6, 7, 8 and to judge when to clean the elements 6, 7, 8. A thermocouple should preferably be disposed in a region of the trap housing 1 which is heated to a high temperature, and measure the temperature in that region to monitor how powdery substances are deposited. The region of the trap housing 1 which is heated to a high temperature is, for example, the exhaust gas space 3.

The elements 6, 7, 8 of the trap assembly 5 are cleaned as follows: An upper lid 13 (see FIG. 2) is removed from the trap housing 1, and the elements 6, 7, 8 are pulled out from the trap housing 1 along fixed guide rails (not shown). Then, the elements 6, 7, 8 are dipped in and cleaned by a cleaning liquid, then washed with water, and thereafter dried by an air blower or the like. The elements 6, 7, 8 are then loaded back into the trap housing 1 along the fixed guide rails. Thereafter, the upper lid 13 is secured to the trap housing 1. In this manner, one cycle of cleaning the elements 6, 7, 8 is finished. An N₂ purge gas may be used to create in the trap housing 1 an environment in which reaction products contained in exhaust gases are highly likely to be solidified. Specifically, an N₂ gas is introduced into the trap housing 1 as a counter flow with respect to exhaust gases introduced into the trap housing 1, thus producing vortex flows in the trap housing 1.

FIG. 9 shows a trapping apparatus according to a second embodiment of the present invention. As shown in FIG. 9, the trapping apparatus has a circular casing 21 with a lid 30 fixed thereto, thus providing a closed housing. The housing has an inlet port 22 on one end thereof and an outlet port 23 on the other end thereof. When the housing is evacuated by a dry vacuum pump connected to the outlet port 23, exhaust gases introduced from the inlet port 22 flow in the housing, and reaction gases contained in the exhaust gases are trapped in the housing. Specifically, the exhaust gases introduced from the inlet port 22 flow into an exhaust gas space 25. The exhaust gases then change their direction as they flow from the exhaust gas space 25 into a trap assembly which comprises trap filters 26, 27, 28, 29 disposed in the housing. The exhaust gases which have passed through the trap assembly flow out of the housing through the outlet port 23.

The trap filter 26 which faces the exhaust gas space 3 comprises a wavy mesh. The trap filters 27, 28 disposed downstream of the trap filter 26 with respect to the flow of exhaust gases comprise meshes whose mesh size is progressively smaller toward the outlet port 23 along the flow of exhaust gases. The trap filter 29 disposed downstream of the trap filters 27, 28 is connected to the outlet port 23 and comprises a mesh having a relatively large mesh size.

The cylindrical casing 21 supports a cooling unit 31 on its outer circumferential surface for cooling the casing 21 and the trap filters 26, 27, 28, 29 to allow reaction products contained in the exhaust gases in the housing to be easily solidified into solid substances.

Operation of the trapping apparatus shown in FIG. 9 will be described below. Exhaust gases introduced from the inlet port 22 flow along a tapered cone 24 into the exhaust gas space 25. Since the exhaust gas space 25 is closed, the exhaust gases find their way successively into the trap filters 26, 27, 28, 29 substantially perpendicularly thereto. When the exhaust gases pass through the trap filter 29 of the largest mesh size, they change their direction parallel to the direction in which the exhaust gases are introduced from the inlet port 22. Thereafter, the exhaust gases flow out of the housing through the outlet port 23. When the exhaust gases flow into the exhaust gas space 25, the exhaust gases flow along the surface of the wavy-mesh trap filter 26. Because the exhaust gas space 25 is closed, stagnant regions are developed in the flow of the exhaust gases along the wavy surface of the trap filter 26. Therefore, reaction products contained in the exhaust gases are solidified into solid substances in the stagnant regions, and the solid substances are trapped by the trap filter 26, with a high efficiency.

The trap filters 26, 27, 28, 29 are disposed coaxially with each other with gaps or clearances left therebetween. As described above, the exhaust gases introduced from the inlet port 22 flow into the exhaust gas space 25, and flow along the wavy-mesh trap filter 26, producing stagnant regions near the surface of the wavy-mesh trap filter 26. The wavy-mesh trap filter 26 can thus trap highly efficiently reaction products contained in the exhaust gases as solid substances. The exhaust gases then pass radially inwardly from the trap filter 26 toward the center of the housing across the trap filters 27, 28, 29. When the exhaust gases pass through the trap filter 29, the flow of exhaust gases is oriented axially toward the outlet port 23, from which the exhaust gases flow out of the housing. The spacings or distances between the trap filters 26, 27, 28, 29 are selected to be large enough to prevent solid substances, which have been converted from the reaction products, from clogging the trap filters 26, 27, 28, 29.

Inasmuch as the trap filters 26, 27, 28, 29 are spaced at sufficient intervals or distances from each other, they can easily be serviced for cleaning or other maintenance processes. The trap filters 26, 27, 28, 29 have respective ends fixed to a lid 30 fastened to an axial end of the cylindrical casing 21. The trap filters 26, 27, 28, 29 can thus readily be removed from the housing for cleaning or replacement simply by detaching the lid 30 from the cylindrical casing 21.

The trap assembly may employ a perforated metal plate, a baffle plate, or any of various other filters other than the trap filters in the form of meshes. If a perforated metal plate with a desired number of holes of desired diameters defined therein is used, then the perforated metal plate can develop a desired pressure loss in the flow of exhaust gases based on the adjustment of the number of the holes and the diameters of the holes in the perforated metal plate, for thereby causing exhaust gases to stay in the housing over a long period of time.

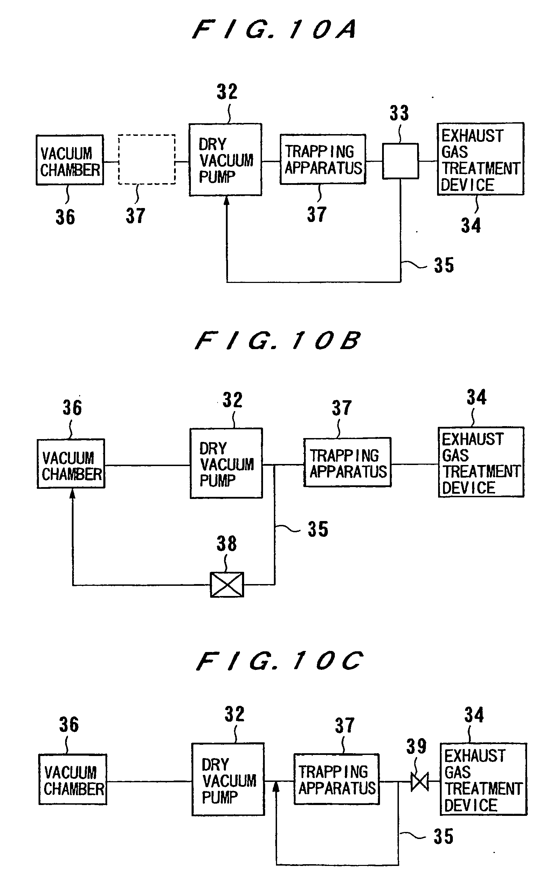

FIGS. 10A, 10B, and 10C show various evacuating systems in block form each including a trapping apparatus according to the present invention, which may be either the trapping apparatus shown in FIG. 1 or the trapping apparatus shown in FIG. 9. Identical reference numerals denote identical parts throughout FIGS. 10A, 10B, and 10C.

In FIG. 10A, a vacuum chamber 36 is evacuated by a dry vacuum pump 32, and a trapping apparatus 37 according to the present invention is connected to the dry vacuum pump 32 downstream thereof An exhaust gas treatment device 34 is connected to the trapping apparatus 37 by a switching trap 33. Exhaust gases delivered from the vacuum chamber 36 by the dry vacuum pump 32 are supplied to the trapping apparatus 37, which trap solid substances from the exhaust gases. The exhaust gases are then discharged from the trapping apparatus 37 and supplied via the switching trap 33 to the exhaust gas treatment device 34, which treats the exhaust gases and then discharges the exhaust gases into the atmosphere. A circulatory flow passage 35 is connected from the switching trap 33 to the dry vacuum pump 32. An inactive gas for purging the dry vacuum pump 32 is supplied from upstream to the dry vacuum pump 32. The switching trap 33 serves to circulate the exhaust gases and the inactive gas through the circulatory flow passage 35, so that the dry vacuum pump 32 can evacuate the vacuum chamber 36 smoothly while the exhaust gases are being purged from the dry vacuum pump 32 at all times by the inactive gas. The trapping apparatus 37 may be positioned upstream of the dry vacuum pump 32 as indicated by the dotted lines in FIG. 10A. Alternatively, two trapping apparatus 37 may be positioned upstream and downstream, respectively, of the dry vacuum pump 32.

In FIG. 10B, the circulatory flow passage 35 is connected from the outlet port of the dry vacuum pump 32 to the vacuum chamber 36. The circulatory flow passage 35 has a gas/solid separator 38 comprising a filter or the like for preventing solid substances converted from reaction products contained in exhaust gases discharged from the vacuum chamber 36 from flowing back into the vacuum chamber 36. The trapping apparatus 37 according to present invention is connected to the dry vacuum pump 32 downstream thereof.

In FIG. 10C, the circulatory flow passage 35 is connected from the outlet port of the trapping apparatus 37 to the inlet port thereof. A pressure regulating valve 37 is connected to the inlet port of the exhaust gas treatment device 34. By adjusting the opening of the pressure regulating valve 37, part of the exhaust gases discharged from the trapping apparatus 37 is circulated back to the inlet port of the trapping apparatus 37. In this manner, the exhaust gases are circulated through the trapping apparatus 37 for trapping reaction products contained in the exhaust gases with greater probability.

In each of the evacuating systems shown in FIGS. 10A, 10B, and 10C, the trapping apparatus 37 has an exhaust gas space having an increased cross-sectional area in the direction in which the exhaust gases flow in and a trap assembly for trapping solid substances converted from reaction products contained in exhaust gases which are introduced from the exhaust gas space perpendicularly to the trap assembly. The trapping apparatus 37 which is connected to the outlet port of the dry vacuum pump 32 can trap highly efficiently solid substances converted from reaction products contained in exhaust gases. Since the exhaust gas space and the trap assembly jointly provide a large surface area for contact with the exhaust gases, the trapping apparatus 37 can trap a large amount of solid substances. Therefore, powdery substances are prevented from being deposited downstream of the dry vacuum pump, unlike conventional trapping apparatus, keeping a high level of exhaust conductance downstream of the dry vacuum pump. Since the trapping apparatus according to the present invention is capable of trapping a large amount of solid substances, the trapping apparatus can be serviced for cleaning or other maintenance activities less frequently.

In the above embodiments, the trap housing is in the shape of a box or a cylinder. However, the shape of the trap housing and the layout of the filter elements may be modified as desired.

As described above, the trapping apparatus according to the present invention can trap reaction products contained in exhaust gases highly efficiently, and can easily be serviced for cleaning or other maintenance activities.

Although certain preferred embodiments of the present invention have been shown and described in detail, it should be understood that various changes and modifications may be made therein without departing from the scope of the appended claims.

### Industrial Applicability

The present invention relates to an apparatus for and a method of trapping, as solid substances, various products contained in exhaust gases which are discharged from a process apparatus such as a semiconductor fabrication apparatus when it is evacuated. Thus, the present invention can be applicable to the various kinds of vacuum evacuation system, which are used in the semiconductor fabrication industry and so on.

## Claims

1. An apparatus for trapping reaction products contained in exhaust gases discharged from a process apparatus, comprising:
a trap housing (1);
an inlet port (2) for introducing exhaust gases into said trap housing (1);
an exhaust gas space (3) connected to said inlet port (2) having an increased cross-sectional area in a direction in which exhaust gases flow in and changing direction of exhaust gases so as to flow from said exhaust gas space (3) substantially perpendicularly;
a trap assembly (5) disposed adjacent to said exhaust gas space (3), said trap assembly (5) comprising a laminated assembly of trap filters having respective different mesh sizes which are progressively smaller along the direction in which said exhaust gases flow through; and
an outlet port (9) in which exhaust gases flow out.

2. An apparatus according to claim 1, wherein said trap assembly (5) has a trap filter (6) comprising wavy meshes lying in a plane along said exhaust gas space (3) on a surface of said trap assembly (5).

3. An apparatus according to claim 1, wherein said trap filters are cooled by cooling waters.

4. An apparatus according to claim 1, wherein said trap assembly (5) includes a perforated metal plate (7a) for developing a pressure loss and rectifying action so that said exhaust gases flow slowly.

5. An apparatus according to claim 1, wherein directions of said exhaust gases flowing into said exhaust gas space is changed perpendicularly into said trap assembly (5).

6. An apparatus according to claim 1, further comprising another trap member of a wavy mesh (6d) extending along an inner wall surface of said exhaust gas space (3) in said trap housing (1).

7. An apparatus according to claim 1, further comprising a trap member of a metal plate assembly (4) in said exhaust gas space (3) extending parallel to a direction in which said exhaust gases are introduced from said inlet port.

8. An apparatus according to claim 3, wherein said trap assembly (5) includes wire demisters (8) for developing smaller pressure loss connected to said outlet port (9).

9. An apparatus according to claim 1, wherein said trap housing (1) has a cooling water flow passage.

10. An apparatus according to claim 1, wherein said trap filters are detachably mounted in said trap housing (1).

11. An apparatus according to claim 1, wherein said trap housing (1) is connected to an outlet port of said vacuum pump.

12. An apparatus according to claim 1, wherein said trap housing (1) is connected to an exhaust gas treatment device.

13. An apparatus according to claim 2, wherein each of said wavy meshes (6) is made of metal wires woven into a wavy mesh having ridges (6a); and a plain-weave mesh member (6b) supporting said wavy mesh (6a) fixedly thereon.

14. An apparatus according to claim 13, wherein said wavy mesh (6a) comprises a plurality, layer of wavy meshes.

15. An apparatus according to claim 13, wherein said plain-weave mesh member (6b) is made of metal wires woven into a mesh.

16. An apparatus according to claim 13, wherein said wavy mesh (6a) comprises a plurality layer of wavy meshes, and said plain-weave mesh member (6b) comprises a pair of plain-weave mesh members disposed one on each side of said plurality layer of wavy meshes.

17. A method of trapping reaction products contained in exhaust gases discharged from a process apparatus, while in contact with a trap member in a trap housing (1) comprising:
introducing the exhaust gases into an exhaust gas space (3) in said trap housing (1) to decelerate the exhaust gases in said exhaust gas space (3); and
changing the direction of said exhaust gases so as to flow from said exhaust gas space (3) substantially perpendicularly to a trap assembly (5) disposed adjacent to said exhaust gas space (3), said trap assembly (5) comprising a laminated assembly of trap filters having respective different mesh sizes which are progressively smaller along the direction in which said exhaust gases flow through, so as to further decelerate the exhaust gases to pass through said trap assembly (5),
wherein a trap filter of a wavy mesh extending along the direction in which said exhaust gases flow in is disposed in the exhaust gas space (3) in said trap housing (1), for contact with said exhaust gases.

18. A method according to claim 17, wherein said trap member for developing a pressure loss comprises a perforated metal plate.

19. A method according to claim 17, wherein said exhaust gases having passed through said trap assembly (5) are introduced to an outlet port.

20. A method according to claim 17, wherein said trap assembly (5) comprises a wire demister.

21. A method according to claim 17, wherein said trap filters are cooled and brought into contact with said exhaust gases so as to deposit solidified reaction products thereto.

22. A method according to claim 17, wherein said trap assembly (5) comprises a perforated metal plate perpendicular to the direction in which said exhaust gases flow.

23. A method according to claim 17, wherein a vacuum pump is connected to said trap housing.

## Patentansprüche

1. Eine Vorrichtung zum Einfangen von Reaktionsprodukten, die in von einer Prozessvorrichtung ausgegebenen Abgasen enthalten sind, wobei die Vorrichtung folgendes aufweist:
ein Einfanggehäuse (1);
einen Einlassanschluss (2) zur Einführung von Abgasen in das Einfanggehäuse (1);
einen Abgasraum (3), der mit dem Einlassanschluss (2) verbunden ist, der eine vergrößerte Querschnittsfläche in einer Richtung besitzt, in der das Abgas strömt und die Richtung des Abgases ändert, so dass dieses im wesentlichen senkrecht aus dem Abgasraum (3) strömt;
eine Einfanganordnung (5), die benachbart zu dem Abgasbereich (3) angeordnet ist, wobei die Einfanganordnung (5) eine geschichtete Anordnung von Einfangfiltern aufweist, die jeweils unterschiedliche Maschengrößen besitzen, die progressiv entlang der Richtung kleiner werden, in die die Abgase durchströmen; und
einen Auslassanschluss (9), durch den Abgase herausströmen.

2. Eine Vorrichtung gemäß Anspruch 1, wobei die Einfanganordnung (5) einen Einfangfilter (6) besitzt, der wellige Maschengitter aufweist, die in einer Ebene entlang des Abgasraums (3) auf einer Oberfläche der Einfanganordnung (5) liegen.

3. Eine Vorrichtung gemäß Anspruch 1, wobei die Einfangfilter durch Kühlwasser gekühlt werden.

4. Eine Vorrichtung gemäß Anspruch 1, wobei die Einfanganordnung (5) eine perforierte Metallplatte (7a) zur Entwicklung eines Druckverlustes und einer Verbesserungs- bzw. Korrekturwirkung umfasst, damit die Abgase langsam strömen.

5. Eine Vorrichtung gemäß Anspruch 1, wobei die Richtung der Abgase, die in den Abgasraum strömen, rechtwinklig in die Einfanganordnung (5) geändert wird.

6. Eine Vorrichtung gemäß Anspruch 1, die weiter ein weiteres Einfangglied aus einem welligen Maschengitter (6d) aufweist, das sich entlang einer inneren Wandoberfläche des genannten Abgasraums (3) in dem Einfanggehäuse (1) erstreckt.

7. Eine Vorrichtung gemäß Anspruch 1, die weiter ein Einfangglied aus einer Metallplattenanordnung (4) in dem Abgasraum (3) aufweist, das sich parallel zu einer Richtung erstreckt, in der die Abgase von dem Einlassanschluss eingeführt werden.

8. Eine Vorrichtung gemäß Anspruch 3, wobei die Einfanganordnung (5) Drahtdemister bzw. -entnebler (8) zur Entwicklung geringer Druckverluste umfasst, die mit dem Auslassanschluss (9) verbunden sind.

9. Eine Vorrichtung gemäß Anspruch 1, wobei das Einfanggehäuse (1) einen Wasserkühlstromdurchlass besitzt.

10. Eine Vorrichtung gemäß Anspruch 1, wobei die Einfangfilter lösbar in dem Einfanggehäuse (1) angebracht sind.

11. Eine Vorrichtung gemäß Anspruch 1, wobei das Einfanggehäuse (1) mit einem Auslassanschluss der Vakuumpumpe verbunden ist.

12. Eine Vorrichtung gemäß Anspruch 1, wobei das Einfanggehäuse (1) mit einer Abgasbehandlungseinrichtung verbunden ist.

13. Eine Vorrichtung gemäß Anspruch 2, wobei jedes der welligen Maschengitter (6) aus Metalldrähten, die in ein welliges Maschengitter mit Graten (6a) gewoben sind, und aus einem geraden Web- bzw. Bindungsmaschenglied (6b), das das wellige Maschengitter (6a) fest darauf trägt, gebildet ist.

14. Eine Vorrichtung gemäß Anspruch 13, wobei das wellige Maschengitter (6a) eine Vielzahl von Schichten an welligen Maschengittern aufweist.

15. Eine Vorrichtung gemäß Anspruch 13, wobei das gerade Web- bzw. Bindungsmaschenglied (6b) aus in ein Maschengitter gewobenen Metalldrähten besteht.

16. Eine Vorrichtung gemäß Anspruch 13, wobei die wellige Maschengitter (6a) eine Vielzahl von Schichten an welligen Maschengittern aufweist, und das gerade Web- bzw. Bindungsmaschenglied (6b) ein Paar von geraden Web- bzw. Bindungsmaschengliedern aufweist, von denen eines auf jeder Seite der Vielzahl von Schichten an welligen Maschengittern angeordnet ist.

17. Ein Verfahren zum Einfangen von Reaktionsprodukten, die in Abgasen enthalten sind, die von einer Prozessvorrichtung abgelassen werden, während sie in Kontakt mit einem Einfangglied in einem Einfanggehäuse (1) sind, wobei das Verfahren folgendes aufweist:
Einführen der Abgase in einen Abgasraum (3) in dem Einfanggehäuse (1), um die Abgase in dem Abgasraum (3) zu verlangsamen; und
Wechseln der Richtung der Abgase, so dass sie aus dem Abgasraum (3) im wesentlichen rechtwinklig zu einer Einfanganordnung (5) strömen, die benachbart zum Abgasraum (3) angeordnet ist, wobei die Einfanganordnung (5) eine geschichtete Anordnung von Einfangfiltern aufweist, die jeweils unterschiedliche Maschengrößen besitzen, die progressiv kleiner wird entlang der Richtung, in die die Abgase hindurchströmen, so dass die Abgase weiter verlangsamt werden, wenn sie durch die Einfangsanordnung (5) hindurchströmen,
wobei ein Einfangfilter aus einem welligen Maschengitter, der sich entlang der Richtung erstreckt, in die die Abgase einströmen, in dem Abgasraum (3) in dem Einfanggehäuse (1) angeordnet ist, und zwar für den Kontakt mit den Abgasen.

18. Ein Verfahren gemäß Anspruch 17, wobei das Einfangglied zur Entwicklung eines Druckverlustes eine perforierte Metallplatte aufweist.

19. Ein Verfahren gemäß Anspruch 17, wobei die Abgase, die durch die Einfanganordnung (5) hindurchgeströmt sind, in einen Auslassanschluss eingeführt werden.

20. Ein Verfahren gemäß Anspruch 17, wobei die Einfanganordnung (5) einen Drahtdemister bzw. -entnebler aufweist.

21. Ein Verfahren gemäß Anspruch 17, wobei die Einfangfilter gekühlt und mit den Abgasen in Kontakt gebracht werden, so dass sich verfestigte Reaktionsprodukte daran ablagern.

22. Ein Verfahren gemäß Anspruch 17, wobei die Einfanganordnung (5) eine perforierte Metallplatte aufweist, die rechtwinklig zu der Richtung ist, in der die Abgase strömen.

23. Ein Verfahren gemäß Anspruch 17, wobei eine Vakuumpumpe mit dem Einfanggehäuse verbunden ist.

## Revendications

1. Appareil pour le piégeage de produits de réaction contenus dans des gaz d'échappement évacués à partir d'un appareil de traitement, comprenant :
une enceinte formant piège (1);
un orifice d'entrée (2) pour introduire des gaz d'échappement dans ladite enceinte formant piège (1);
un espace (3) des gaz d'échappement raccordé audit orifice d'entrée (2) comportant une surface en coupe transversale accrue dans une direction, dans laquelle les gaz d'échappement pénètrent, et modifiant la direction des gaz d'échappement de manière qu'ils s'écoulent sensiblement perpendiculairement à partir dudit espace (3) des gaz d'échappement;
un ensemble formant piège (5) disposé de manière adjacente audit espace (3) des gaz d'échappement, ledit ensemble formant piège (5) comprenant un ensemble stratifié formé de filtres de piégeage ayant des structures maillées de différentes tailles respectives, qui sont progressivement plus petites dans la direction dans laquelle lesdits gaz d'échappement les traversent; et
un orifice de sortie (9), dans lequel les gaz d'échappement s'évacuent.

2. Appareil selon la revendication 1, dans lequel ledit ensemble formant piège (5) comporte un filtre de piégeage (6) comprenant des structures maillées ondulées situées dans un plan le long dudit espace (3) des gaz d'échappement sur une surface dudit ensemble formant piège (5).

3. Appareil selon la revendication 1, dans lequel lesdits filtres de piégeage sont refroidis par des eaux de refroidissement.

4. Appareil selon la revendication 1, dans lequel ledit ensemble formant piège (5) inclut une plaque métallique perforée (7a) servant à développer une perte de pression et une action de redressement de sorte que lesdits gaz d'échappement s'écoulent lentement.

5. Appareil selon la revendication 1, dans lequel la direction desdits gaz d'échappement pénétrant dans ledit espace des gaz d'échappement est modifiée perpendiculairement dans ledit ensemble formant piège (5).

6. Appareil selon la revendication 1, comprenant en outre un autre élément de piégeage d'une structure maillée ondulée (6d) s'étendant le long d'une surface de paroi intérieure dudit gaz (3) des gaz d'échappement, dans ladite enceinte formant piège (1).

7. Appareil selon la revendication 1, comprenant en outre un élément de piégeage d'un ensemble à plaque métallique (4) situé dans ledit espace (3) des gaz d'échappement, et qui s'étend parallèlement dans une direction dans laquelle lesdits gaz d'échappement sont introduits à partir dudit orifice d'entrée.

8. Appareil selon la revendication 3, dans lequel ledit ensemble formant piège (5) inclut des dispositifs de désembuage à fils (8) servant à développer une perte de pression inférieure, qui sont connectés audit orifice de sortie (9).

9. Appareil selon la revendication 1, dans lequel ladite enceinte formant piège (1) possède un passage d'écoulement d'eau de refroidissement.

10. Appareil selon la revendication 1, dans lequel lesdits filtres de piégeage sont montés de façon amovible dans ladite enceinte formant piège.

11. Appareil selon la revendication 1, dans lequel ladite enceinte formant piège (1) est raccordée à un orifice de sortie de ladite pompe à vide.

12. Appareil selon la revendication 1, dans lequel ladite enceinte formant piège (1) est raccordée à un dispositif de traitement des gaz d'échappement.

13. Appareil selon la revendication 2, dans lequel chacune desdites structures maillées ondulées (6) formées de fils métalliques tissés pour former une structure maillée ondulée comportant des sillons (6a); et un élément de structure maillée à armure unie (6b) supportant ladite structure maillée ondulée (6a) qui est fixée sur lui.

14. Appareil selon la revendication 13, dans lequel ladite structure maillée ondulée (6a) comprend une pluralité de couches de structures maillées ondulées.

15. Appareil selon la revendication 13, dans lequel ledit élément de structure maillée à armure unie (6b) est formé de fils métalliques tissés pour former une structure maillée.

16. Appareil selon la revendication 13, dans lequel ladite structure maillée ondulée (6a) comprend une pluralité de couches de structures maillées ondulées, et ledit élément formant structure maillée à armure unie (6b) comporte une paire d'éléments de structure maillée à armure unie disposés de chaque côté de ladite pluralité de couches de structures maillées ondulées.

17. Procédé pour le piégeage de produits de réaction contenus dans des gaz d'échappement évacués d'un appareil de traitement, alors qu'ils sont en contact avec un élément de piégeage dans une enceinte formant piège (1), comprenant :
l'introduction des gaz d'échappement dans un espace (3) des gaz d'échappement dans ladite enceinte formant piège (1) pour décélérer les gaz d'échappement dans ledit espace (3) des gaz d'échappement; et
la modification de la direction desdits gaz d'échappement de manière qu'il s'écoule depuis ledit espace (3) des gaz d'échappement essentiellement perpendiculairement en direction d'un ensemble formant piège (5) disposé de manière adjacente audit espace (3) des gaz d'échappement, ledit ensemble formant piège (5) comprenant un ensemble stratifié de filtres de piégeage formés de structures maillées ayant différentes tailles respectives qui diminuent progressivement dans la direction dans laquelle les gaz d'échappement s'évacuent, de manière à décélérer de façon supplémentaire les gaz d'échappement pour leur passage à travers l'ensemble formant piège (5),
selon lequel un filtre de piégeage formé d'une structure maillée ondulée s'étendant dans la direction, dans laquelle lesdits gaz d'échappement s'écoulent, est disposé dans l'espace (3) des gaz d'échappement dans ladite enceinte formant piège (1), pour venir en contact avec lesdits gaz d'échappement.

18. Procédé selon la revendication 17, selon lequel ledit élément de piégeage servant à développer une perte de pression comprend une plaque métallique perforée.

19. Procédé selon la revendication 17, selon lequel lesdits gaz d'échappement, qui ont traversé ledit ensemble formant piège (5), sont introduits dans un orifice de sortie.

20. Procédé selon la revendication 17, selon lequel ledit ensemble formant piège (5) comprend un dispositif de désembuage à fils.

21. Procédé selon la revendication 17, selon lequel lesdits filtres de piégeage sont refroidis et placés en contact avec lesdits gaz d'échappement de manière que des produits de réaction solidifiés se déposent sur ces filtres.

22. Procédé selon la revendication 17, selon lequel ledit ensemble formant piège (5) comprend une plaque métallique perforée perpendiculaire à la direction dans laquelle lesdits gaz d'échappement se déplacent.

23. Procédé selon la revendication 17, selon lequel une pompe à vide est raccordée à ladite enceinte formant piège.
